# FASCICULE DE BREVET EUROPEEN

(11) **EP 3 964 901 B1**
(45) Date de publication et mention de la délivrance du brevet: **10.07.2024**
(21) Numéro de dépôt: 21193792.5
(22) Date de dépôt: 30.08.2021
(51) Int. Cl.: G05B 19/05, G06Q 50/06, F02N 11/08, H01H 71/00, H01H 33/36, H02H 7/08, G05B 9/02

(54) **INTERFACE DE PILOTAGE DE DISJONCTEURS ET INTERRUPTEURS MOYENNE TENSION**
STEUERSCHNITTSTELLE FÜR MITTELSPANNUNGSSCHUTZ- UND TRENNSCHALTER
INTERFACE FOR CONTROLLING MEDIUM-VOLTAGE CIRCUIT BREAKERS AND SWITCHES

(30) Priorité: 08.09.2020 FR 2009083
(43) Date de publication de la demande: 09.03.2022
(73) Titulaire: Schneider Electric Industries SAS, 92500 Rueil-Malmaison (FR)
(72) Inventeur: MOLLIER, Christophe, 38500 Coublevie (FR)
(74) Mandataire: Schneider Electric

(56) Documents cités:
- EP-A2- 2 797 219
- WO-A1-2011/147928
- WO-A1-2020/109285
- DE-C1- 3 823 574

## Description

### Domaine technique

L'invention relève plus particulièrement du domaine des sous-stations moyenne tension de distribution de courant et de leur pilotage. Les sous-stations moyenne tension gèrent généralement la distribution de courant dans une gamme généralement comprise entre 1000V à 50 000V. Pour de telles tensions, les appareils de coupure tels que les interrupteurs et les disjoncteurs doivent être pilotés par des dispositifs de commande fiables et rapides et en général ces appareils de coupure comportent un dispositif de manoeuvre que l'on arme tel qu'un ressort comprimé qui se détend pour actionner les disjoncteurs ou interrupteurs ou ouvrir les couteaux des interrupteurs ou disjoncteurs très rapidement. Pour opérer à distance leurs dispositifs de manoeuvre, les appareils de coupure modernes utilisent des moteurs électriques. Ces moteurs, qui permettent d'armer le dispositif de manoeuvre, sont alimentés par une tension généralement entre 24V et 48V et consomment un courant non négligeable lors de leur fonctionnement.

Dans les sous-stations il est fréquent d'alimenter ces moteurs au moyen d'un onduleur (UPS pour en anglais « Uninterruptible Power Supply ») pour assurer la continuité de gestion de manoeuvre même si le réseau d'alimentation est interrompu. Le démarrage d'un moteur présente un pic de courant, et si on souhaitait démarrer plusieurs moteurs en même temps, cela exigerait un onduleur puissant, volumineux et coûteux. Afin de réduire le volume et le coût, l'onduleur est dimensionné pour ne commander qu'un seul moteur à la fois, et un système est prévu pour s'assurer que la commande des différents moteurs soit toujours séquencée.

### Technique antérieure

Une solution connue pour assurer ce séquencement systématique du démarrage des moteurs est d'avoir une carte électronique de commande à microcontrôleur par unité fonctionnelle et un réseau de communication entre les unités fonctionnelles de commande moteur et la carte de commande (par exemple un réseau avec un protocole connu sous la marque « MODBUS » pour lequel les moteurs et leurs unités de commande ont chacun une adresse unique), le microcontrôleur gérant des temporisations entre les commandes de démarrage des moteurs. Un tel dispositif est coûteux parce qu'il nécessite une gestion électronique maître-esclave qui nécessite une carte électronique informatisée par unité fonctionnelle ainsi qu'un boîtier plus volumineux. De plus, les causes potentielles de pannes sont accrues.

DE3823574 C1 montre un mécanisme d'actionnement d'un interrupteur qui utilise un moteur électrique réversible avec un commutateur respectif pour chaque sens de rotation permettant d'inverser la polarité des enroulements du moteur.

### Problème technique

Il est souhaitable de mettre en oeuvre une solution plus économique et décentralisée pour l'activation séquencée des moteurs.

### Exposé de l'invention

Pour ce faire, la présente invention concerne un système de pilotage de moteurs de manoeuvre d'appareils de coupure, notamment pour une sous-station d'alimentation électrique, comportant des unités de commande desdits moteurs, qui comporte pour la mise en fonctionnement d'un seul desdits moteurs à la fois, un dispositif de gestion de priorité de fonctionnement des moteurs pourvu d'une première ligne dite ligne parallèle, support d'une donnée binaire comportant un premier état représentatif de l'arrêt de l'ensemble des moteurs et un second état représentatif du fonctionnement de l'un quelconque des moteurs, sur laquelle sont raccordées les unités en parallèle, ladite ligne parallèle étant reliée à un dispositif d'interdiction de démarrage moteur de chacune des unités et d'une seconde ligne dite ligne série sur laquelle sont reliées les unités en série dans un chaînage amont/aval, ladite ligne série constituant un moyen d'inhibition de fonctionnement des moteurs en aval dudit un quelconque desdits moteurs sur détection d'un signal de démarrage dudit un quelconque desdits moteurs, ladite ligne série étant reliée à un dispositif d'inhibition de fonctionnement moteur de chacune des unités.

En d'autres termes, la présente invention concerne un système de pilotage de moteurs de manoeuvre d'appareils de coupure comportant des unités de commande desdits moteurs. Pour la mise en fonctionnement d'un seul desdits moteurs à la fois, un dispositif de gestion de priorité de fonctionnement des moteurs est pourvu :
- d'une première ligne, dite ligne parallèle, configurée pour transmettre une donnée binaire correspondant à :
   - un premier état si l'ensemble des moteurs sont à l'arrêt, ou
   - un second état si l'un quelconque des moteurs est en fonctionnement, et
- d'une seconde ligne, dite ligne série, configurée pour transmettre une donnée, notamment binaire, associée à chaque unité de commande correspondant à :
   - un premier état si aucun des moteurs en amont du moteur de ladite unité de commande a reçu une commande de démarrage et/ou est en fonctionnement, ou
   - un second état si un moteur en amont du moteur de ladite unité de commande a reçu une commande de démarrage et/ou est en fonctionnement.

Le démarrage d'un moteur particulier est possible seulement lorsque les données binaires de la ligne parallèle et de la ligne série associées à l'unité de commande de ce moteur sont respectivement dans le premier état.

Plus particulièrement, des dispositifs d'interdiction de démarrage moteur de chacune des unités sont reliés en parallèle sur la ligne parallèle. Des dispositifs d'inhibition de fonctionnement moteur de chacune des unités sont reliées en série dans un chainage amont/aval sur la ligne série.

Ce système utilise, pour la commande et la gestion de priorité des unités de contrôle moteur, deux lignes simples ne nécessitant ni protocole informatique, ni composants de gestion de réseau série ou parallèle au niveau des unités de commande ce qui simplifie le fonctionnement des unités et du dispositif de commande associé et évite des opérations de reprogrammation des unités lors de l'ajout ou le retrait éventuel d'unités.

Lesdits dispositifs d'interdiction de démarrage moteur et d'inhibition de fonctionnement moteur peuvent être réalisés en logique câblée ou être réalisé par un système à microprocesseur ou microcontrôleur programmé muni d'entrées de détection d'état des lignes et de sorties de pilotage de relais de puissance de commande des moteurs.

Les caractéristiques exposées dans les paragraphes suivants peuvent, optionnellement, être mises en oeuvre. Elles peuvent être mises en oeuvre indépendamment les unes des autres ou en combinaison les unes avec les autres :

Chaque unité peut comporter une logique de mise de la première ligne parallèle au second état représentatif du fonctionnement de son moteur précédant la mise en fonctionnement du moteur de cette unité, ledit second état activant le dispositif d'interdiction de démarrage moteur des autres unités, ladite logique comportant en outre des moyens de remise de la ligne parallèle au premier état au niveau de l'unité sur arrêt dudit moteur.

Ceci permet de chaîner les unités d'une manière simple sans se soucier du nombre d'unités présentes dans la sous-station.

Chacune des unités peut comporter un dispositif de coupure de la ligne série, câblé pour couper la ligne série sur réception d'une commande de démarrage du moteur de cette unité, la coupure de la ligne série par une unité amont constituant ledit signal de démarrage du moteur de l'unité amont activant lesdits dispositifs d'inhibition de fonctionnement moteur des unités aval par rapport à ladite unité amont, ledit dispositif de coupure étant en outre configuré pour remettre la ligne série à l'état initial au niveau de ladite unité amont sur arrêt dudit moteur.

Chaque unité peut comporter une logique séquentielle programmée ou câblée d'activation et de désactivation de mise en route de son moteur et de gestion desdites lignes série et parallèle.

Chaque unité peut comporter un circuit ou une séquence de désactivation de son dispositif d'interdiction de démarrage moteur sur détection de la mise en route de son propre moteur.

Etablir la priorité entre les unités se fait par la position des unités, depuis l'amont vers l'aval, par exemple de gauche à droite dans une armoire.

Les unités peuvent comporter une logique séquentielle de commande de fonctionnement de leur moteur, ladite logique séquentielle comportant ou pilotant un ou plusieurs dispositifs de commande de relais de puissance d'alimentation en courant dudit moteur dans un sens d'ouverture et dans un sens de fermeture dudit appareil de coupure, au moins un dispositif d'interdiction de démarrage moteur au moins un dispositif d'inhibition de fonctionnement moteur dudit dispositif de gestion de priorité.

Ceci permet de réaliser des unités simples dépourvues de composants numériques et aisées à mettre en oeuvre et entretenir.

La logique séquentielle peut être pourvue d'un premier étage comportant un premier circuit d'interdiction/autorisation de fonctionnement moteur dans un sens de fermeture dudit appareil de coupure muni d'un premier dispositif de commande interdisant un fonctionnement du moteur dans le sens de fermeture de l'appareil de coupure sur détection d'une commande de fonctionnement du moteur dudit appareil de coupure dans un sens d'ouverture de l'appareil de coupure.

Ceci constitue une sécurité rendant prioritaire la coupure du circuit commandé sur sa mise en fonction.

La logique séquentielle peut être pourvue d'un deuxième étage comportant au moins un dit dispositif d'interdiction de démarrage moteur pourvu d'un deuxième dispositif de commande piloté par une entrée de réception de ladite donnée binaire validée par un circuit d'interdiction/autorisation configuré pour bloquer le passage de la donnée binaire lorsque le moteur à démarrer ou en fonctionnement est le propre moteur de l'unité et autoriser le passage de la donnée binaire lorsque le moteur à démarrer ou en fonctionnement est un moteur externe à l'unité.

Ceci permet au moteur de l'unité de fonctionner lorsque la commande de mise en route vient de son unité.

La logique séquentielle peut être pourvue d'un troisième étage de gestion de la ligne parallèle et de la ligne série.

Cet étage va couper la ligne série vers l'aval lorsque l'unité démarre son moteur.

La logique séquentielle peut être pourvue d'au moins un étage de commande de puissance muni d'au moins une paire d'interrupteurs de puissance d'alimentation en courant de manoeuvre du moteur dans le sens ouverture de l'appareil de coupure et d'alimentation en courant de manoeuvre du moteur dans le sens fermeture de l'appareil de coupure.

Selon l'exemple les interrupteurs de puissance sont schématisés comme des relais électromécaniques mais des relais sous forme de composants à semiconducteurs IGBT ou contacteur ou autres peuvent être utilisés.

La logique séquentielle peut être pourvue d'au moins un quatrième étage muni d'un ou plusieurs troisièmes circuits d'interdiction/autorisation de fonctionnement moteur sur détection de paramètres du moteur.

Ceci permet de prendre en compte des défauts tels que défaut de masse, ouverture capot ou autre pour interdire la manoeuvre des moteurs.

L'unité de commande peut être configurée de sorte que sur réception d'un niveau représentatif du fonctionnement d'un moteur externe à l'unité sur la ligne parallèle, ledit deuxième dispositif de commande coupe des signaux de commande fonctionnement moteur au niveau dudit dispositif d'interdiction de démarrage moteur dans un sens d'ouverture de l'appareil de coupure et dans un sens de fermeture de l'appareil de coupure.

Au moins certains desdits dispositifs de commande, circuits d'interdiction/autorisation de fonctionnement moteur, dispositif d'interdiction de démarrage moteur et dispositif d'inhibition de fonctionnement moteur peuvent être constitués par des relais de commutation de signaux. Ces relais peuvent être électromécaniques ou à semiconducteurs statiques comme par exemple des interrupteurs analogiques (« analog switch » en anglais).

Dans le cas de relais électromécaniques, l'un des dispositifs de commande du quatrième étage peut comporter une entrée capteur de fin de course ouverture de l'appareil de coupure relié à une bobine de commande d'ouverture d'un premier relais d'interdiction/autorisation de fonctionnement moteur dans le sens ouverture de l'appareil de coupure en sorte de stopper le moteur en fin d'ouverture dudit appareil de coupure et une entrée capteur de fin de course fermeture de l'appareil de coupure relié à une bobine d'un second relais d'interdiction/autorisation de fonctionnement moteur dans le sens fermeture de l'appareil de coupure en sorte de stopper le moteur en fin de fermeture dudit appareil de coupure.

L'unité peut comporter un circuit de contournement du dispositif d'interdiction de démarrage moteur activé par un circuit (4C) de détection du fonctionnement du moteur de ladite unité de commande.

Ceci évite de couper le moteur de l'unité dont la commande est valide.

L'unité peut comporter un relais d'autorisation de manoeuvre du moteur, la bobine du relais étant reliée à une entrée de réception d'un signal de détection d'une autorisation fonctionnement moteur.

L'unité peut comporter un relais d'autorisation/interdiction de manoeuvre dont la bobine est reliée à une entrée de réception d'un signal de détection de mise à la terre de l'interrupteur moyenne tension.

Le troisième étage de l'unité peut comporter un étage de commande d'autorisation de manoeuvre moteur sur présence d'une liaison amont sur la ligne série.

La commande d'autorisation de manoeuvre sur présence d'une liaison amont commande un relais fermant l'alimentation du point froid de bobines de relais de puissance de commande moteur et fermant un relais de mise à zéro de la ligne parallèle lors du fonctionnement du moteur de ladite unité à transmettre à d'autres unités.

Dans le cas où la ligne amont est ouverte, la commande d'autorisation de manoeuvre ouvre l'alimentation du point froid de bobines de relais de puissance de commande moteur et ouvre le relais de mise à zéro de la ligne parallèle empêchant ainsi le fonctionnement du moteur et la mise à zéro de la ligne parallèle.

La logique séquentielle peut avantageusement être cadencée par les temps de commutation des relais de commutation de signaux.

### Brève description des dessins

D'autres caractéristiques, détails et avantages de l'invention apparaîtront à la lecture de la description détaillée ci-après, et à l'analyse des dessins annexés, sur lesquels :
[Fig. 1] montre un exemple de schéma simplifié d'une unité de commande de moteur selon la présente description;
[Fig. 2] montre un schéma simplifié d'un exemple de chainage parallèle de plusieurs unités de commande selon la présente description;
[Fig. 3] montre un schéma simplifié d'un exemple de chainage série de plusieurs unités de commande selon la présente description ;
[Fig. 4] montre un logigramme d'une logique séquentielle programmée ou câblée applicable à l'invention ;
[Fig. 5] montre un exemple schématique de dispositif à microprocesseur.

### Description des modes de réalisation

Les dessins et la description ci-après contiennent, pour l'essentiel, des éléments pouvant non seulement servir à mieux faire comprendre la présente invention, mais aussi contribuer à sa définition, le cas échéant.

L'invention s'adresse à des sous-stations moyenne tension dites intelligentes comportant une pluralité d'appareils de commutation tels que des disjoncteurs, commutateurs ou interrupteurs moyenne tension pilotés par une interface externe.

La moyenne tension est communément une tension de 1000 V à 50000 V. Les appareillages de commutation sont en général des disjoncteurs, des commutateurs ou encore des interrupteurs de 600 A à 1250 A pour de la distribution secondaire.

Les appareils de coupure comportent des moteurs qui basculent les contacts d'appareils de commutation et qui permettent une ouverture des couteaux très rapide pour réduire ou supprimer les arcs électriques.

Le fonctionnement peut être basé sur la compression d'un ressort qui lorsqu'il est libéré permet une bascule brutale du couteau après passage d'un point d'équilibre pour des appareils de coupure par exemple connus sous l'appellation CDT chez la demanderesse ou un dispositif emmagasinant de l'énergie à la fermeture d'un interrupteur pour armer un ressort de réouverture pour des appareils de coupure connus sous l'appellation CD1 ou CD2 chez la demanderesse.

Ce type de sous-stations pilotées par une téléconduite 24H/24 comporte en général un petit onduleur capable d'alimenter un seul moteur d'appareil de coupure en même temps.

Certains appareils de coupure qui emmagasinent de l'énergie pour leur basculement nécessitent une mise en route automatique de leur moteur s'ils ont besoin de le recharger. Lors de l'installation de la sous-station notamment et dans certains cas de défauts il peut y avoir des demandes de rechargement simultanées des appareils de coupure alors que les onduleurs ne peuvent fournir le courant de crête de plusieurs moteurs.

Chaque interrupteur possède son moteur et son unité de commande sous forme d'une carte électronique ou électrique qui comporte des entrées de capteurs ou de micro-switches, terme anglais pour micro interrupteurs, pour autoriser ou interdire le fonctionnement de relais de puissance de commande du moteur selon la présence ou non d'une commande de fonctionnement moteur et la présence ou l'absence de défauts des appareils de coupure.

Une sous-station comporte en général de trois à plusieurs dizaines d'unités.

Dans le cadre de la présente invention appliquée à un système à relais, on prend en compte le fait que les relais de puissance de commande moteur ont un temps de réaction de l'ordre de cinq à vingt millisecondes ce qui est supérieur au temps de réaction d'une logique de commande, comme une logique de commande à relais, dont le temps de réaction est plutôt de l'ordre de trois millisecondes.

Ceci permet à une unité recevant une commande de mise en route de son moteur de transmettre un signal dit de synchro aux autres unités avant la mise en route effective de son moteur suite au basculement de son relais de puissance mais aussi d'arrêter la séquence de mise en route de son moteur sur réception d'un signal de synchro d'une unité tierce bien avant la mise en route effective de son moteur.

Comme il sera vu ci-après un principe de la présente description est d'utiliser une ligne filaire parallèle reliée à un dispositif d'interdiction de démarrage moteur de chacune des unités et une seconde ligne filaire série reliée à un dispositif d'inhibition de fonctionnement moteur de chacune des unités.

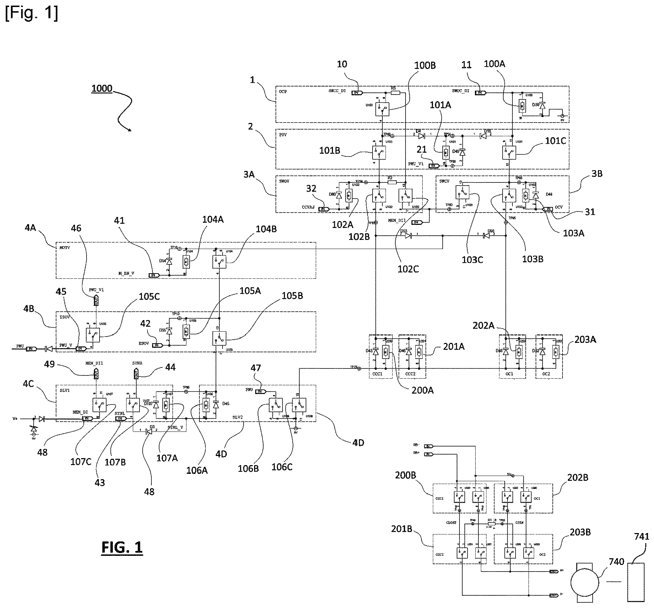

La figure 1 représente un exemple d'unité de commande 1000 d'au moins un moteur de manoeuvre d'un interrupteur de coupure qui comporte une logique séquentielle à relais de commande de fonctionnement dudit moteur. Le principe employé s'applique de manière similaire à moteur de commande de disjoncteurs ou de commutateurs.

Le principe de la logique séquentielle telle que décrite pour un interrupteur comporte une cascade de relais de commutation de signaux pourvue d'un premier étage 1 comportant un premier relais d'interdiction de manoeuvre de fermeture dudit appareil de coupure lorsque une commande d'ouverture prioritaire est émise.

Ce premier étage comporte une première bobine 100A dont l'alimentation coupe le circuit 100B dudit premier relais sur détection d'une commande de manoeuvre d'ouverture dudit appareil de coupure.

Un deuxième étage 2, va interdire la manoeuvre du moteur si l'unité reçoit un signal d'utilisation de puissance par une autre unité.

Ce deuxième étage est pourvu d'au moins un deuxième relais 101B, 101C d'inhibition moteur pourvu d'une deuxième bobine 101A alimentée par une entrée 21 recevant le signal de fonctionnement d'un moteur externe à l'unité.

L'unité comporte en outre un troisième étage 3A, 3B de validation de fonctionnement moteur pourvu de relais 102B, 102C, 103B, 103C et d'entrées de signaux de fin de course ouverture 31 et fin de course fermeture 32 pour arrêter le moteur lorsqu'il arrive en fin de course.

L'unité comporte en outre selon l'exemple au moins un quatrième étage 4A, 4B muni d'un ou plusieurs quatrièmes relais d'interdiction de manoeuvre sur détection de conditions d'interdiction de fonctionnement moteur telles que interrupteur moyenne tension à la terre ou autre.

L'unité de commande comporte au moins un relais de puissance d'alimentation en courant du moteur dans le sens fermeture de l'interrupteur ici réalisée par le relais double 200B et au moins un relais de puissance pour l'alimentation en courant du moteur dans le sens ouverture de l'interrupteur ici réalisée par le relais double 202B. Selon l'exemple l'unité comporte des relais 200B, 201B en série pour l'ouverture et des relais 202B, 203B en série pour la fermeture de l'interrupteur pour réduire les arcs au démarrage et à l'arrêt des moteurs.

Ces relais reçoivent des alimentations de puissance DB+ et DB- et commandent les tensions d'alimentation moteur M+, M- d'alimentation du moteur 740 de commande de l'appareil de coupure 741.

L'unité comporte enfin un étage de gestion de priorité moteur 4C, 4D vu ci-après.

Pour gérer la mise en fonctionnement d'un seul moteur à la fois dans une sous-station comportant plusieurs appareils de coupure, la présente description propose un dispositif de gestion de priorité de fonctionnement des moteurs pourvu d'une première ligne 1010 et d'une seconde ligne 1020.

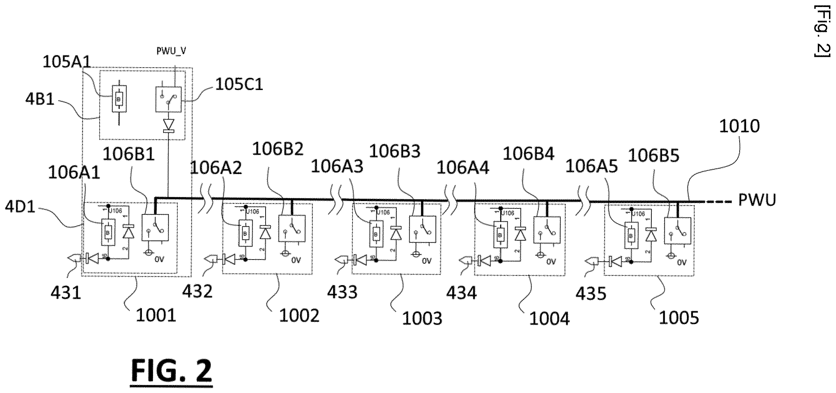

La première ligne 1010, dite ligne parallèle ou PWU, est représentée en figure 2. Cette ligne est le support d'une donnée binaire comportant un premier état représentatif de l'arrêt de l'ensemble des moteurs et un second état représentatif du fonctionnement de l'un quelconque des moteurs. Dans la présente description, le premier état est un état « en l'air » et le second état est la mise à zéro de la ligne, une logique inversée restant bien entendu possible. Par « support d'une donnée binaire », on comprend qu'une ligne est configurée pour transmettre cette donnée binaire. Par « second état représentatif du fonctionnement de l'un quelconque des moteurs », on comprend que l'un quelconque des moteurs est en fonctionnement, notamment suite à la réception d'une commande de démarrage.

Ainsi, la première ligne est configurée pour transmettre une même donnée binaire à l'ensemble des unités de commandes des moteurs correspondant soit :
- au premier état si l'ensemble des moteurs sont à l'arrêt, soit
- au second état si l'un quelconque des moteurs est en fonctionnement.

Toujours selon la figure 2, les unités de la sous-station 1001, 1002, 1003, 1004, 1005, ... sont raccordées en parallèle sur la ligne 1010, ladite ligne parallèle étant reliée à un dispositif d'interdiction de démarrage moteur de chaque unité comportant les relais 106B de l'étage de gestion de priorité 4D de chacune des unités, soit selon l'exemple, les relais 106B1 à 106B5. Ces relais permettent de mettre à zéro la ligne lors d'une commande du démarrage du moteur d'une unité. Ce circuit se retrouve en figure 1 sous la référence 106B et la bobine de commande 106A du relais 106B va être active lors de la commande de démarrage du moteur de l'unité lorsque le signal de commande est validé au niveau du relais 105A.

Cette ligne est en outre raccordée à un circuit d'autorisation/interdiction de fonctionnement du moteur des unités au travers d'un relais 105C1 représenté uniquement pour l'unité 1001 pour éviter de charger trop le schéma. Ce relais se retrouve en figure 1 sous la référence 105C et est commandé par une bobine 105A qui va laisser passer le signal PWU 45 en PWU_V1 46 pour interdire la séquence de démarrage du moteur de l'unité lorsque le moteur d'une autre unité est en marche alors que la bobine 105A va couper la liaison entre le signal PWU et le signal PWU_V1 lorsque c'est le moteur de l'unité qui démarre.

Lorsque le moteur d'une unité démarre, il y a donc mise à zéro de la ligne PWU 1010 et désactivation de l'entrée 21 du dispositif d'interdiction de démarrage correspondante de cette unité.

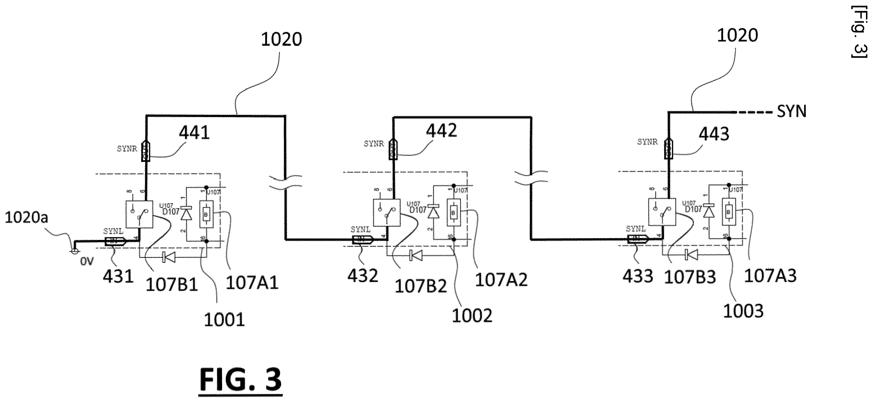

La seconde ligne 1020, dite ligne série et représentée en figure 3 est une ligne d'inhibition de fonctionnement des moteurs en aval dudit un quelconque desdits moteurs sur détection d'un signal de démarrage dudit un quelconque desdits moteurs.

Ainsi, la seconde ligne est configurée pour transmettre une donnée, notamment binaire, associée à chaque unité de commande d'un moteur, correspondant soit à :
- un premier état si aucun des moteurs en amont du moteur de ladite unité de commande a reçu une commande de démarrage et/ou est en fonctionnement, soit à
- un second état si un moteur en amont du moteur de ladite unité de commande a reçu une commande de démarrage et/ou est en fonctionnement.

Ceci permet de donner priorité au démarrage des moteurs de l'amont vers l'aval, c'est-à-dire que la séquence commence toujours par le moteur tout à l'amont et suit une séquence en cascade vers l'aval.

Comme représenté en figure 3, la ligne série comporte une extrémité amont 1020a mise à zéro et traverse un relais de coupure 107B de chaque unité depuis l'unité amont 1001 vers les unités aval 1002, 1003, .... De retour à la figure 1, la bobine de commande 107A du relais de coupure 107B a son point chaud relié à la commande moteur de l'unité correspondante et son point froid relié à la ligne série au travers d'une diode anti-retour D3.

Ainsi et selon les figures 1 et 3:
a. soit la ligne série SYNL amont 43 est coupée par une unité amont et le point froid des bobines 107A et 106A n'est pas alimenté ce qui empêche :
   i. de couper la ligne série SYNR aval 44 au niveau du relais 107B ;
   ii. de démarrer le moteur au niveau des relais 106B, 106C commandés par la bobine 106A ;
   iii. de contourner l'interdiction de manoeuvre PWU_V 21 au moyen du signal MEM_DI1 48 au niveau du relais 107C.
b. soit la ligne série amont SYNL 43 est active et :
   i. le relais 107B permet de couper la ligne série aval SYNR 44 lorsque la commande du moteur de l'unité correspondante arrive sur le point chaud de la bobine 107A ;
   ii. le relais 106B peut mettre à zéro la ligne parallèle PWU;
   iii. le relais 106C peut commander le démarrage du moteur.

Ainsi chaque unité comporte un dispositif logique ou étage de commande 106A, 106B de mise de la première ligne parallèle au second état représentatif du fonctionnement de son moteur en réponse à la mise en fonctionnement du moteur de cette unité, ledit second état activant les dispositifs d'interdiction de démarrage moteur des autres unités.

De retour à la figure 1, l'étage de commande 106A constitue un étage d'autorisation de manoeuvre moteur sur présence d'une liaison amont 43 sur la ligne série. Sur présence d'une liaison amont, la commande de mise en route moteur ferme un relais 106C qui valide l'alimentation du point froid de bobines 200A, 201A, 202A, 203A de relais de puissance de commande moteur et ferme un relais 106B de mise à zéro de la ligne parallèle PWU 1010 sur la borne 47 lors du fonctionnement du moteur de ladite unité pour transmettre cette information aux autres unités.

Si la liaison amont est ouverte, le relais 106A ne peut être alimenté ce qui laisse ouvert le relais 106B et empêche l'alimentation du relais 106C, interdisant ainsi le démarrage du moteur.

La commande 107A ouvre pour sa part la liaison série vers l'aval SYNR 44 au niveau du relais 107B lors du fonctionnement moteur de l'unité.

Par ailleurs les unités comportent en outre des moyens de libération de la ligne parallèle sur arrêt dudit moteur au travers du relais 105B qui en coupant l'arrivée du point chaud de la bobine 106A lorsque le moteur s'arrête (par exemple dans le cas de l'activation d'un contact de fin de course 31 ou 32) ouvre le relais 106B.

Une séquence de mise en route du moteur peut comporter les étapes de validation suivantes :
- Vérification que PWU soit haute impédance au niveau de l'entrée 21 PWU_V1,
- Vérification des conditions de fonctionnement moteur au niveau des entrées 31, 32 contacts de fin de course CCVAJ, OCV et au niveau de l'entrée 42 regroupant des micro-interrupteurs tels que mise à la terre de l'interrupteur moyenne tension ESOV,
- Arrêt de la vérification PWU haute impédance en ouvrant le contact entre PWUV et PWUV1 au niveau du relais 105C,
- Si SYNL de l'unité est tiré au 0V c'est-à-dire lorsque aucune unité amont n'est en fonctionnement:
   a. autorisation du pilotage des relais de puissance au niveau du relais 106C commandés par la bobine 106A,
   b. mise à 0V de la ligne parallèle PWU au niveau du relais 106B,
   c. mise en haute impédance de la ligne série aval SYNR en haute impédance avec le relais 107B pour couper la puissance sur les interfaces aval,
   d. tant que le moteur est alimenté, maintien du contournement du test de la liaison PWU_V avec le contact 105C.

Lorsque la commande est terminée, la ligne parallèle PWU repasse en haute impédance au niveau du relais 106B et la ligne aval SYNR est reconnectée à la ligne amont SYNL au niveau du relais 107B tandis que le signal MEM_DI est désactivé et que la commande des relais de puissance est ré-ouverte au niveau du relais 106C.

La ligne série amont SYNL entrant dans l'unité au niveau de la connexion 43 amont et la ligne série aval SYNR sortant de l'unité au niveau de la connexion 44 permet donc une priorisation de marche moteur de l'amont vers l'aval.

Dans le cas ou deux unités recevraient un ordre en simultané, c'est l'unité amont qui obtiendrait la puissance et la puissance de l'unité aval serait déconnectée.

PWU permet d'informer les unités que la puissance moteur d'une unité est utilisée ce qui permet d'ignorer les commandes de mise en route des autres unités.

Dans l'exemple, la liaison série est connectée à 0V lorsque le fonctionnement moteur est autorisé et en haute impédance dans le cas contraire. Il est toutefois concevable de réaliser un montage ou le signal de fonctionnement d'une unité amont serait à une tension différente de zéro.

Dans l'exemple, la ligne parallèle PWU est connectée à 0 volts si l'un des moteurs est utilisé et est en haute impédance si aucun moteur n'est utilisé. D'autres configurations restent possibles dans le cadre de l'invention.

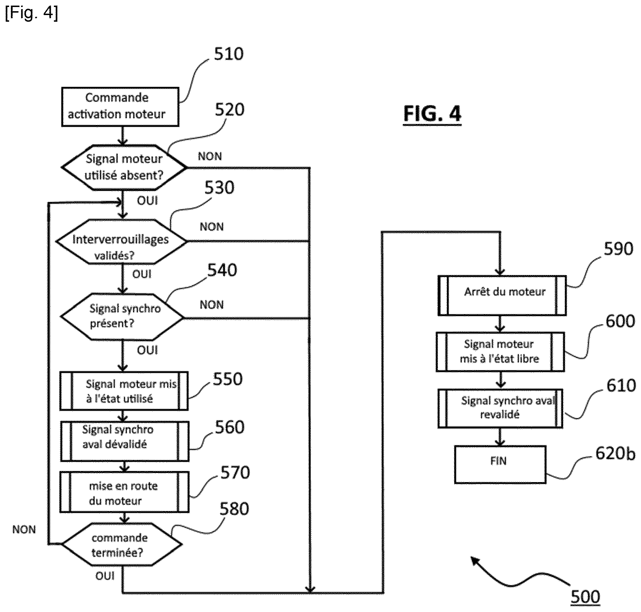

La figure 4 donne une représentation sous forme de logigramme d'une séquence de fonctionnement d'une logique programmée ou câblée applicable à l'invention.

En effet, selon l'invention, la logique câblée de l'exemple de la figure 1 peut être remplacée par une carte électronique telle qu'une carte à microprocesseur ou microcontrôleur pourvue d'entrées pour des capteurs tels que des interrupteurs métier tels que des interverrouillages qui inhibent le démarrage moteur dans le cas où des conditions anormales telles qu'ouverture du boîtier, mise à la terre de l'interrupteur moyenne tension, d'entrées pour des capteurs fin de course moteur, entrées/sorties pour la gestion des lignes parallèle 1010 et série 1020 et sorties de commande des relais de puissance 200, 201, 202, 203 des moteurs.

Dans un tel cas, le microprocesseur ou microcontrôleur comporte un logiciel de commande moteur qui va réaliser les séquences nécessaires à la manoeuvre des moteurs et au positionnement des lignes série et parallèle dans les états souhaités selon l'exemple de logique séquentielle 500 simplifié de la figure 4 qui se trouve aussi être applicable au système câblé des figures 1 à 3.

La figure 4 représente dans ce cadre une séquence de fonctionnement initiée par une commande d'activation moteur 510. Une fois la commande reçue une séquence de tests est initiée.

Cette séquence comporte :
- une première étape 520 où est testé le positionnement de la ligne parallèle pour vérifier si un signal moteur utilisé PWM de la ligne parallèle 1010 n'est pas déjà présent,
- une deuxième étape 530 où est testé le positionnement des interverrouillages garantissant le bon fonctionnement du moteur associé à la carte ;
- une troisième étape 540 ou est vérifié que le signal synchro 1020 venant des modules amont est bien présent.

Si le résultat de toutes ces étapes est positif, l'unité concernée met le signal moteur de la liaison parallèle 1010 à l'état utilisé à l'étape 550, dé-valide le signal synchro de la liaison série 1020 pour les unités aval à l'étape 560, met en route le moteur à l'étape 570 puis teste si la commande est terminée à l'étape 580.

Lorsque la fin de commande est validée, le logiciel déclenche l'arrêt du moteur à l'étape 590, remet le signal PWM de la ligne parallèle a l'état libre à l'étape 600, revalide le signal synchro pour les unités aval à l'étape 610 puis la séquence se termine à l'étape de fin 620b pour revenir en attente d'une commande d'activation.

Par contre tant que la commande n'est pas terminée une partie de la boucle est de nouveau exécutée pour tester si un défaut apparaît notamment de sorte que le processus puisse être interrompu par l'arrêt du moteur.

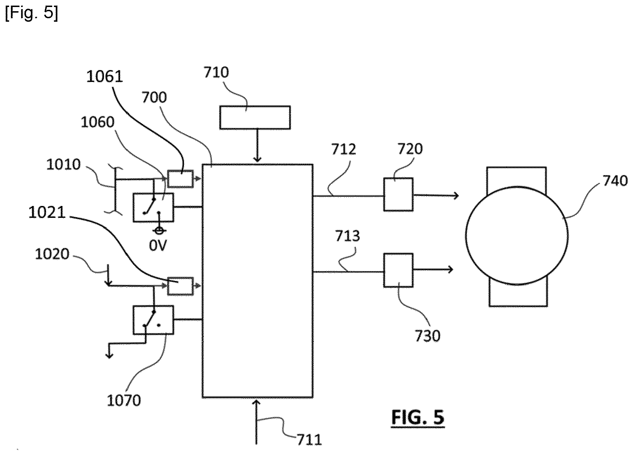

Un dispositif contrôleur 700 à microprocesseur ou microcontrôleur est schématisé en figure 5 avec en 710 les interverrouillages reliés à des entrées du contrôleur, la liaison parallèle et la liaison série reliés à des entrées du contrôleur au travers de composants d'isolation 1021, 1061, la liaison parallèle reliée à une sortie du contrôleur au travers d'un premier relais ou interrupteur analogique 1060, la liaison série 1020 reliée à une sortie du contrôleur au travers d'un deuxième relais ou transistor, le signal de commande démarrage moteur en entrée 711 du contrôleur et les sorties 712, 713 pilotant des relais 720, 730 similaires aux relais 200, ..., 203 de la figure 1 pour piloter le moteur 740.

L'invention ne se limite pas aux exemples décrits ci-avant. Notamment comme vu précédemment, le principe de l'invention pour lequel deux lignes filaires relient des unités de commande moteur à logique séquentielle peut s'appliquer à des systèmes pour lesquels la logique séquentielle est réalisée avec une carte numérique à microprocesseur, microcontrôleur ou logique programmable au lieu de relais.

## Revendications

1. Système de pilotage de moteurs de manoeuvre d'appareils de coupure, notamment pour une sous-station d'alimentation électrique, comportant des unités de commande (1000, 1001, 1002, 1003, 1004, 1005, ...) desdits moteurs, **caractérisé en ce qu'**il comporte pour la mise en fonctionnement d'un seul desdits moteurs à la fois, un dispositif de gestion de priorité de fonctionnement des moteurs pourvu d'une première ligne (1010) dite ligne parallèle, support d'une donnée binaire comportant un premier état représentatif de l'arrêt de l'ensemble des moteurs et un second état représentatif du fonctionnement de l'un quelconque des moteurs, sur laquelle sont raccordées les unités en parallèle, ladite ligne parallèle étant reliée à un dispositif d'interdiction de démarrage moteur de chacune des unités et d'une seconde ligne (1020) dite ligne série, sur laquelle sont reliées les unités (1001, 1002, 1003, ...) en série dans un chainage amont/aval, ladite ligne série constituant un moyen d'inhibition de fonctionnement des moteurs en aval dudit un quelconque desdits moteurs sur détection d'un signal de démarrage dudit un quelconque desdits moteurs, sur laquelle sont reliées les unités en série, ladite ligne série étant reliée à un dispositif (106A, 106B, 106C) d'inhibition de fonctionnement moteur de chacune des unités.

2. Système de pilotage d'une pluralité de moteurs de manoeuvre d'appareils de coupure selon la revendication 1, pour lequel chaque unité comporte un dispositif logique (106A1, 106A2, 106B1, 106B2, 106A3, 106B3, 106A4, 106B4, ...) de mise de la première ligne parallèle au second état représentatif du fonctionnement de son moteur précédant la mise en fonctionnement du moteur de cette unité, ledit second état activant les dispositifs d'interdiction de démarrage des moteurs des autres unités, ledit dispositif logique comportant en outre des moyens de remise de la ligne parallèle au premier état au niveau de l'unité sur arrêt dudit moteur.

3. Système de pilotage d'une pluralité de moteurs de manoeuvre d'appareils de coupure selon la revendication 1 ou 2, pour lequel chacune des unités comporte un dispositif de coupure (107A1, 107B1, 107A2, 107B2, 107A3, 107B3, ...) de la ligne série, câblé pour couper la ligne série sur réception d'une commande de démarrage du moteur de cette unité, la coupure de la ligne série par une unité amont constituant ledit signal de démarrage du moteur de l'unité amont activant lesdits dispositifs d'inhibition de fonctionnement moteur des unités aval par rapport à ladite unité amont, ledit dispositif de coupure étant en outre configuré pour remettre la ligne série à l'état initial au niveau de ladite unité amont sur arrêt dudit moteur.

4. Système de pilotage d'une pluralité de moteurs de manoeuvre d'appareils de coupure selon la revendication 1, 2 ou 3, pour lequel chaque unité comporte une logique séquentielle (500) programmée ou câblée d'activation et de désactivation de mise en route de son moteur et de gestion desdites lignes série et parallèle.

5. Système de pilotage d'une pluralité de moteurs de manoeuvre d'appareils de coupure selon l'une quelconque des revendications 1 à 4, pour lequel chaque unité comporte un circuit (45, 46, 105C, 101B, 101C) de désactivation de son dispositif d'interdiction de démarrage sur détection de la mise en route de son propre moteur.

6. Système de pilotage d'une pluralité de moteurs de manoeuvre d'appareils de coupure selon la revendication 1, comprenant une unité de commande (1000) d'au moins un moteur de manoeuvre d'un appareil de coupure, l'unité de commande comportant une logique séquentielle de commande de fonctionnement dudit moteur, ladite logique séquentielle comportant ou pilotant un ou plusieurs dispositifs de commande de relais de puissance d'alimentation en courant dudit moteur dans un sens d'ouverture et dans un sens de fermeture dudit appareil de coupure, au moins un dispositif d'interdiction de démarrage moteur et au moins un dispositif d'inhibition de fonctionnement du moteur dudit dispositif de gestion de priorité.

7. Système de pilotage d'une pluralité de moteurs de manoeuvre d'appareils de coupure selon la revendication 6 pour lequel la logique séquentielle est pourvue :
- d'un premier étage (1) comportant un premier circuit (100B) d'interdiction/autorisation de fonctionnement moteur dans un sens de fermeture dudit appareil de coupure muni d'un premier dispositif de commande (100A) interdisant un fonctionnement du moteur dans le sens de fermeture de l'appareil de coupure sur détection d'une commande de fonctionnement du moteur dudit appareil de coupure dans un sens d'ouverture de l'appareil de coupure,
- d'un deuxième étage (2) comportant un dit dispositif (101B, 101C) d'interdiction de démarrage moteur pourvu d'un deuxième dispositif de commande (101A) piloté par une entrée (21) de réception de ladite donnée binaire validée par un circuit d'interdiction/autorisation (105C) configuré pour bloquer le passage de la donnée binaire lorsque le moteur à démarrer ou en fonctionnement est le propre moteur de l'unité et autoriser le passage de la donnée binaire lorsque le moteur à démarrer ou en fonctionnement est un moteur externe à l'unité,
- d'un troisième étage (4A, 4B, 4C) de gestion de la ligne parallèle et de la ligne série,
- d'au moins un étage de commande de puissance muni d'au moins une paire (200A, 200B, 201A, 201B, 202A, 202B, 203A, 203B) d'interrupteurs d'alimentation en courant de manoeuvre du moteur dans le sens ouverture de l'appareil de coupure (202A, 202B, 203A, 203B) et d'alimentation en courant de manoeuvre du moteur dans le sens fermeture de l'appareil de coupure ( 200A, 200B, 201A, 201B).

8. Système de pilotage d'une pluralité de moteurs de manoeuvre d'appareils de coupure selon la revendication 7 pour lequel la logique séquentielle est pourvue d'au moins un quatrième étage (3A, 3B, 4A) muni d'un ou plusieurs troisièmes circuits d'interdiction/autorisation (102B, 102C, 103B, 103C, 104A, 104B) de fonctionnement moteur sur détection de paramètres du moteur.

9. Système de pilotage d'une pluralité de moteurs de manoeuvre d'appareils de coupure selon la revendication 7, pour lequel sur réception d'un niveau représentatif du fonctionnement d'un moteur externe à l'unité sur la ligne parallèle, ledit deuxième dispositif de commande (101A) coupe des signaux de commande fonctionnement moteur au niveau dudit dispositif d'interdiction de démarrage moteur dans un sens d'ouverture de l'appareil de coupure et dans un sens de fermeture de l'appareil de coupure.

10. Système de pilotage d'une pluralité de moteurs de manoeuvre d'appareils de coupure selon l'une quelconque des revendications 7 à 9 pour lequel au moins certains desdits dispositifs de commande, circuits d'interdiction/autorisation de fonctionnement moteur, dispositif d'interdiction de démarrage moteur et dispositif d'inhibition de fonctionnement moteur sont constitués par des relais de commutation de signaux.

11. Système de pilotage d'une pluralité de moteurs de manoeuvre d'appareils de coupure selon les revendications 8 et 10, pour lequel l'un des dispositifs de commande (3A, 3B) du quatrième étage comporte une entrée (31) capteur de fin de course ouverture de l'appareil de coupure relié à une bobine (103A) de commande d'ouverture d'un premier relais (103B, 103C) d'interdiction/autorisation de fonctionnement moteur dans le sens ouverture de l'appareil de coupure en sorte de stopper le moteur en fin d'ouverture dudit appareil de coupure et une entrée (32) capteur de fin de course fermeture de l'appareil de coupure relié à une bobine (102A) d'un second relais (102B, 102C) d'interdiction/autorisation de fonctionnement moteur dans le sens fermeture de l'appareil de coupure en sorte de stopper le moteur en fin de fermeture dudit appareil de coupure.

12. Système de pilotage d'une pluralité de moteurs de manoeuvre d'appareils de coupure selon la revendication 10 ou 11, comportant un circuit (102C, 103C) de contournement du dispositif d'interdiction de démarrage moteur activé par un circuit (4C) de détection du fonctionnement du moteur de ladite unité de commande.

13. Système de pilotage d'une pluralité de moteurs de manoeuvre d'appareils de coupure selon l'une quelconque des revendications 10 à 12, comportant un relais (104A, 104B) d'autorisation de manoeuvre du moteur dont la bobine (104A) est reliée à une entrée (41) de réception d'un signal de détection d'une autorisation fonctionnement moteur.

14. Système de pilotage d'une pluralité de moteurs de manoeuvre d'appareils de coupure selon l'une quelconque des revendications 10 à 13, comportant un relais (105A, 105B, 105C) d'autorisation/interdiction de manoeuvre dont la bobine est reliée à une entrée (42) de réception d'un signal de détection de mise à la terre de l'interrupteur moyenne tension.

15. Système de pilotage d'une pluralité de moteurs de manoeuvre d'appareils de coupure selon l'une quelconque des revendications 10 à 14, pour lequel le troisième étage comporte un étage de commande (106A) d'autorisation de manoeuvre moteur sur présence d'une liaison amont (43) sur la ligne série.

16. Système de pilotage d'une pluralité de moteurs de manoeuvre d'appareils de coupure selon la revendication 15, pour lequel, sur présence d'une liaison amont, la commande (106A) d'autorisation de manoeuvre commande un relais (106C), qui ferme l'alimentation du point froid de bobines (200A, 201A, 202A, 203A) de relais de puissance de commande moteur, et ferme un relais (106B) de mise à zéro de la ligne parallèle (1010) lors du fonctionnement du moteur de ladite unité à transmettre à d'autres unités.

17. Système de pilotage d'une pluralité de moteurs de manoeuvre d'appareils de coupure selon l'une quelconque des revendications 10 à 16 **caractérisé en ce qu'**il est cadencé par les temps de commutation des relais de commutation de signaux.

## Patentansprüche

1. Steuersystem von Bedienmotoren von Abschaltgeräten, insbesondere für ein Stromversorgungs-Umspannwerk, das Steuereinheiten (1000, 1001, 1002, 1003, 1004, 1005, ... ) der Motoren aufweist, **dadurch gekennzeichnet, dass** es für die Inbetriebnahme jeweils eines einzigen der Motoren eine Betriebspriorität-Verwaltungsvorrichtung der Motoren aufweist, die mit einer ersten Leitung (1010), Parallelleitung genannt, Träger eines Binärdatenwerts, der einen ersten Zustand, der für das Ausschalten der Gesamtheit der Motoren repräsentativ ist, und einen zweiten Zustand aufweist, der für den Betrieb eines beliebigen der Motoren repräsentativ ist, an die die Einheiten parallel angeschlossen sind, wobei die Parallelleitung mit einer Motoranlasssperrvorrichtung jeder der Einheiten verbunden ist, und mit einer zweiten Leitung (1020), Reihenleitung genannt, versehen ist, auf der die Einheiten (1001, 1002, 1003, ... ) in Reihe in einer stromaufwärtigen/stromabwärtigen Verkettung verbunden sind, wobei die Reihenleitung eine Betriebshemmungseinrichtung der Motoren stromabwärts hinter dem einen beliebigen der Motoren bei Erkennung eines Anlasssignals des einen beliebigen der Motoren bildet, auf der die Einheiten in Reihe verbunden sind, wobei die Reihenleitung mit einer Motorbetrieb-Hemmvorrichtung (106A, 106, 106C) jeder der Einheiten verbunden ist.

2. Steuersystem einer Vielzahl von Bedienmotoren von Abschaltgeräten nach Anspruch 1, bei dem jede Einheit eine logische Vorrichtung (106A1, 106A2, 106B1, 106B2, 106A3, 106B3, 106A4, 106B4, ... ) zum Versetzen der ersten Parallelleitung in den für den Betrieb ihres Motors repräsentativen zweiten Zustand vor der Inbetriebnahme des Motors dieser Einheit aufweist, wobei der zweite Zustand die Anlassssperrvorrichtungen der Motoren der anderen Einheiten aktiviert, wobei die logische Vorrichtung außerdem Einrichtungen zum Zurückversetzen der Parallelleitung in den ersten Zustand auf der Ebene der Einheit beim Ausschalten des Motors aufweist.

3. Steuersystem einer Vielzahl von Bedienmotoren von Abschaltgeräten nach Anspruch 1 oder 2, bei dem jede der Einheiten eine Abschaltvorrichtung (107A1, 107B1, 107A2, 107B2, 107A3, 107B3, ... ) der Reihenleitung aufweist, die verkabelt ist, um die Reihenleitung bei Empfang einer Anlasssteuerung des Motors dieser Einheit abzuschalten, wobei das Abschalten der Reihenleitung durch eine stromaufwärts liegende Einheit das Anlasssignal des Motors der stromaufwärts liegenden Einheit bildet, das die Motorbetrieb-Hemmvorrichtungen der stromabwärts liegenden Einheiten bezüglich der stromaufwärts liegenden Einheit aktiviert, wobei die Abschaltvorrichtung außerdem konfiguriert ist, beim Ausschalten des Motors die Reihenleitung auf der Ebene der stromaufwärts liegenden Einheit in den Ausgangszustand zurückzuversetzen.

4. Steuersystem einer Vielzahl von Bedienmotoren von Abschaltgeräten nach Anspruch 1, 2 oder 3, bei dem jede Einheit eine programmierte oder verkabelte sequentielle Logik (500) zur Aktivierung und Deaktivierung der Inbetriebnahme ihres Motors und der Verwaltung der Reihen- und Parallelleitungen aufweist.

5. Steuersystem einer Vielzahl von Bedienmotoren von Abschaltgeräten nach einem der Ansprüche 1 bis 4, bei dem jede Einheit einen Schaltkreis (45, 46, 1050, 101B, 101C) zur Deaktivierung ihrer Anlasssperrvorrichtung bei Erkennung der Inbetriebnahme ihres eigenen Motors aufweist.

6. Steuersystem einer Vielzahl von Bedienmotoren von Abschaltgeräten nach Anspruch 1, das eine Steuereinheit (1000) mindestens eines Bedienmotors eines Abschaltgeräts enthält, wobei die Steuereinheit eine sequentielle Logik zur Betriebssteuerung des Motors aufweist, wobei die sequentielle Logik eine oder mehrere Steuervorrichtungen von Leistungsrelais zur Stromversorgung des Motors in einer Öffnungsrichtung und in einer Schließrichtung des Abschaltgeräts, mindestens eine Motoranlasssperrvorrichtung und mindestens eine Betriebshemmungsvorrichtung des Motors der Prioritätsverwaltungsvorrichtung aufweist oder steuert.

7. Steuersystem einer Vielzahl von Bedienmotoren von Abschaltgeräten nach Anspruch 6, bei dem die sequentielle Logik versehen ist mit:
- einer ersten Stufe (1), die einen ersten Motorbetrieb-Sperr-/Freigabeschaltkreis (100B) in einer Schließrichtung des Abschaltgeräts aufweist, die mit einer ersten Steuervorrichtung (100A) ausgestattet ist, die einen Betrieb des Motors in der Schließrichtung des Abschaltgeräts bei Erkennung einer Betriebssteuerung des Motors des Abschaltgeräts in einer Öffnungsrichtung des Abschaltgeräts sperrt,
- einer zweiten Stufe (2), die eine Motoranlasssperrvorrichtung (101B, 101C) aufweist, die mit einer zweiten Steuervorrichtung (101A) versehen ist, die von einem Empfangseingang (21) des Binärdatenwerts gesteuert wird, der durch einen Sperr-/Freigabeschaltkreis (105C) validiert wird, der konfiguriert ist, den Durchgang des Binärdatenwerts zu blockieren, wenn der anzulassende oder in Betrieb befindliche Motor der eigene Motor der Einheit ist, und den Durchgang des Binärdatenwerts freizugeben, wenn der anzulassende oder in Betrieb befindliche Motor ein Motor außerhalb der Einheit ist,
- einer dritten Stufe (4A, 4B, 4C) der Verwaltung der Parallelleitung und der Reihenleitung,
- mindestens einer Leistungssteuerungsstufe, die mit mindestens einem Paar (200A, 200B, 201A, 201B, 202A, 202B, 203A, 203B) von Schaltern zur Bedienstromversorgung des Motors in der Öffnungsrichtung des Abschaltgeräts (202A, 202B, 203A, 203B) und der Bedienstromversorgung des Motors in der Schließrichtung des Abschaltgeräts (200A, 200B, 201A, 201B) ausgestattet ist.

8. Steuersystem einer Vielzahl von Bedienmotoren von Abschaltgeräten nach Anspruch 7, bei dem die sequentielle Logik mit mindestens einer vierten Stufe (3A, 3B, 4A) versehen ist, die mit einem oder mehreren dritten Motorbetrieb-Sperr-/Freigabeschaltkreisen (102B, 102C, 103B, 103C, 104A, 104B) bei Erkennung von Parametern des Motors ausgestattet ist.

9. Steuersystem einer Vielzahl von Bedienmotoren von Abschaltgeräten nach Anspruch 7, bei dem bei Empfang einer für den Betrieb eines Motors außerhalb der Einheit auf der Parallelleitung repräsentativen Ebene die zweite Steuervorrichtung (101A) Motorbetrieb-Steuersignale auf der Ebene der Motor-Anlasssperrvorrichtung in einer Öffnungsrichtung des Abschaltgeräts und in einer Schließrichtung des Abschaltgeräts abschaltet.

10. Steuersystem einer Vielzahl von Bedienmotoren von Abschaltgeräten nach einem der Ansprüche 7 bis 9, bei dem mindestens bestimmte der Steuervorrichtungen, Motorbetrieb-Sperr-/Freigabeschaltkreise, Motoranlasssperrvorrichtung und Motorbetrieb-Hemmvorrichtung aus Signalumschaltrelais bestehen.

11. Steuersystem einer Vielzahl von Bedienmotoren von Abschaltgeräten nach den Ansprüchen 8 und 10, bei dem eine der Steuervorrichtungen (3A, 3B) der vierten Stufe einen Öffnungsendstellungssensor-Eingang (31) des Abschaltgeräts verbunden mit einer Öffnungssteuerspule (103A) eines ersten Motorbetrieb-Sperr-/Freigaberelais (103B, 103C) in der Öffnungsrichtung des Abschaltgeräts, um den Motor am Ende der Öffnung des Abschaltgeräts zu stoppen, und einen Schließendstellungssensor-Eingang (32) des Abschaltgeräts verbunden mit einer Spule (102A) eines zweiten Motorbetrieb-Sperr-/Freigaberelais (102B, 102C) in der Schließrichtung des Abschaltgeräts aufweist, um den Motor am Ende des Schließens des Abschaltgeräts zu stoppen.

12. Steuersystem einer Vielzahl von Bedienmotoren von Abschaltgeräten nach Anspruch 10 oder 11, das einen Umgehungsschaltkreis (102C, 103C) der Motoranlasssperrvorrichtung aufweist, der von einem Erkennungsschaltkreis (4C) des Betriebs des Motors der Steuereinheit aktiviert wird.

13. Steuersystem einer Vielzahl von Bedienmotoren von Abschaltgeräten nach einem der Ansprüche 10 bis 12, das ein Bedienungsfreigaberelais (104A, 104B) des Motors aufweist, dessen Spule (104A) mit einem Empfangseingang (41) eines Erkennungssignals einer Motorbetriebsfreigabe verbunden ist.

14. Steuersystem einer Vielzahl von Bedienmotoren von Abschaltgeräten nach einem der Ansprüche 10 bis 13, das ein Bedienungsfreigabe-/sperrrelais (105A, 105B, 105C) aufweist, dessen Spule mit einem Empfangseingang (42) eines Erkennungssignals einer Erdung des Mittelspannnungsschalters verbunden ist.

15. Steuersystem einer Vielzahl von Bedienmotoren von Abschaltgeräten nach einem der Ansprüche 10 bis 14, bei dem die dritte Stufe eine Steuerstufe (106A) der Motorbedienungsfreigabe bei Vorhandensein einer stromaufwärtigen Verbindung (43) auf der Reihenleitung aufweist.

16. Steuersystem einer Vielzahl von Bedienmotoren von Abschaltgeräten nach Anspruch 15, bei dem, bei Vorhandensein einer stromaufwärtigen Verbindung, die Bedienungsfreigabesteuerung (106A) ein Relais (106C) steuert, das die Versorgung des kalten Punkts von Spulen (200A, 201A, 202A, 203A) von Motorsteuerung-Leistungsrelais schließt, und ein Nullrücksetzungsrelais (106B) der Parallelleitung (1010) bei dem Betrieb des Motors der Einheit schließt, der an andere Einheiten zu übertragen ist.

17. Steuersystem einer Vielzahl von Bedienmotoren von Abschaltgeräten nach einem der Ansprüche 10 bis 16, **dadurch gekennzeichnet, dass** es von den Umschaltzeiten der Signalumschaltrelais getaktet wird.

## Claims

1. System for driving motors for operating switching units, in particular for an electrical supply substation, comprising control units (1000, 1001, 1002, 1003, 1004, 1005, ...) for controlling said motors, **characterized in that** it comprises, to have only one of said motors in operation at a time, a device for managing the priority of operation of the motors which is provided with a first line (1010), referred to as the parallel line, carrying a binary datum comprising a first state representative of the stopping of all of the motors and a second state representative of the operation of any one of the motors, to which the units are connected in parallel, said parallel line being connected to a device for preventing the starting of the motor of each of the units and a second line (1020), referred to as the series line, to which the units (1001, 1002, 1003, ...) are connected in series in an upstream/downstream chain, said series line constituting a means for inhibiting the operation of the motors downstream of said any one of said motors on detection of a signal for starting said any one of said motors, to which the units are connected in series, said series line being connected to a device (106A, 106B, 106C) for inhibiting the operation of the motor of each of the units.

2. System for driving a plurality of motors for operating switching units according to Claim 1, for which each unit comprises a logic device (106A1, 106A2, 106B1, 106B2, 106A3, 106B3, 106A4, 106B4, ...) for placing the first, parallel line in the second state representative of the operation of its motor preceding the bringing into operation of the motor of this unit, said second state activating the devices for preventing the starting of the motors of the other units, said logic device further comprising means for placing the parallel line back in the first state at the level of the unit on said motor stopping.

3. System for driving a plurality of motors for operating switching units according to Claim 1 or 2, for which each of the units comprises a switching device (107A1, 107B1, 107A2, 107B2, 107A3, 107B3, ...) for switching the series line, wired to switch the series line on receiving a command to start the motor of said unit, the switching of the series line by an upstream unit constituting said signal for starting the motor of the upstream unit activating said devices for inhibiting the operation of the motor of the downstream units with respect to said upstream unit, said switching device being further configured to place the series line back in the initial state at the level of said upstream unit on said motor stopping.

4. System for driving a plurality of motors for operating switching units according to Claim 1, 2 or 3, for which each unit comprises a wired or programmed sequential logic (500) for activating and deactivating the starting up of its motor and for managing said series and parallel lines.

5. System for driving a plurality of motors for operating switching units according to any one of Claims 1 to 4, for which each unit comprises a circuit (45, 46, 105C, 101B, 101C) for deactivating its device for preventing starting on detecting the starting up of its own motor.

6. System for driving a plurality of motors for operating switching units according to Claim 1, comprising a unit (1000) for controlling at least one motor for operating a switching unit, the control unit comprising a sequential logic for controlling the operation of said motor, said sequential logic comprising or driving one or more devices for controlling power relays for supplying said motor with current in a direction of opening and in a direction of closing of said switching unit, at least one device for preventing the starting of the motor and at least one device for inhibiting the operation of the motor of said priority management device.

7. System for driving a plurality of motors for operating switching units according to Claim 6, for which the sequential logic is provided:
- with a first stage (1) comprising a first circuit (100B) for preventing/allowing the operation of the motor in a direction of closing of said switching unit provided with a first control device (100A) preventing operation of the motor in the direction of closing of the switching unit on detection of a command to operate the motor of said switching unit in a direction of opening of the switching unit,
- with a second stage (2) comprising one said device (101B, 101C) for preventing the starting of the motor provided with a second control device (101A) driven by an input (21) for receiving said binary datum validated by a preventing/allowing circuit (105C) configured to block the passage of the binary datum when the motor to be started or in operation is the motor belonging to the unit and to allow the passage of the binary datum when the motor to be started or in operation is a motor external to the unit,
- with a third stage (4A, 4B, 4C) for managing the parallel line and the series line,
- with at least one power control stage provided with at least one pair (200A, 200B, 201A, 201B, 202A, 202B, 203A, 203B) of switches for supplying current for operating the motor in the direction of opening of the switching unit (202A, 202B, 203A, 203B) and for supplying current for operating the motor in the direction of closing of the switching unit (200A, 200B, 201A, 201B).

8. System for driving a plurality of motors for operating switching units according to Claim 7, for which the sequential logic is provided with at least a fourth stage (3A, 3B, 4A) provided with one or more third circuits (102B, 102C, 103B, 103C, 104A, 104B) for preventing/allowing the operation of the motor on detection of parameters of the motor.

9. System for driving a plurality of motors for operating switching units according to Claim 7, for which, on receiving a level representative of the operation of a motor external to the unit on the parallel line, said second control device (101A) switches signals for controlling the operation of the motor at the level of said device for preventing the starting of the motor in a direction of opening of the switching unit and in a direction of closing of the switching unit.

10. System for driving a plurality of motors for operating switching units according to any one of Claims 7 to 9, for which at least some of said control devices, circuits for preventing/allowing the operation of the motor, device for preventing the starting of the motor and device for inhibiting the operation of the motor are formed by signal-switching relays.

11. System for driving a plurality of motors for operating switching units according to Claims 8 and 10, for which one of the control devices (3A, 3B) of the fourth stage comprises an input (31) for an end-of-travel sensor for the opening of the switching unit connected to a coil (103A) for controlling the opening of a first relay (103B, 103C) for preventing/allowing the operation of the motor in the direction of opening of the switching unit so as to stop the motor at the end of opening of said switching unit and an input (32) for an end-of-travel sensor for the closing of the switching unit connected to a coil (102A) of a second relay (102B, 102C) for preventing/allowing the operation of the motor in the direction of closing of the switching unit so as to stop the motor at the end of closing of said switching unit.

12. System for driving a plurality of motors for operating switching units according to Claim 10 or 11, comprising a circuit (102C, 103C) for bypassing the device for preventing the starting of the motor activated by a circuit (4C) for detecting the operation of the motor of said control unit.

13. System for driving a plurality of motors for operating switching units according to any one of Claims 10 to 12, comprising a relay (104A, 104B) for allowing the operation of the motor, the coil (104A) of which is connected to an input (41) for receiving a signal for detection of authorization of the operation of the motor.

14. System for driving a plurality of motors for operating switching units according to any one of Claims 10 to 13, comprising a relay (105A, 105B, 105C) for allowing/preventing operation, the coil of which is connected to an input (42) for receiving a signal for detection of the grounding of the medium-voltage switch.

15. System for driving a plurality of motors for operating switching units according to any one of Claims 10 to 14, for which the third stage comprises a stage (106A) for controlling authorization of the operation of the motor in the presence of an upstream connection (43) to the series line.

16. System for driving a plurality of motors for operating switching units according to Claim 15, for which, in the presence of an upstream connection, the control (106A) for authorizing operation controls a relay (106C), which closes the power supply of the cold spot of the coils (200A, 201A, 202A, 203A) of the power relays for controlling the motor, and closes a relay (106B) for zero-setting the parallel line (1010) during the operation of the motor of said unit to be transmitted to other units.

17. System for driving a plurality of motors for operating switching units according to any one of Claims 10 to 16, **characterized in that** it is timed by the switching times of the signal-switching relays.
